# EUROPEAN PATENT SPECIFICATION

(11) **EP 1 953 755 B1**
(45) Date of publication and mention of the grant of the patent: **25.05.2011**
(21) Application number: 07022425.8
(22) Date of filing: 19.11.2007
(51) Int. Cl.: G11B 23/107

(54) **Leader member and recording tape cartridge**
Führungselement und Aufzeichnungsbandkartusche
Élément de guidage et cassette à bande d'enregistrement

(30) Priority: 26.01.2007 JP 2007015773
(43) Date of publication of application: 06.08.2008
(73) Proprietor: FUJIFILM Corporation, Minato-ku Tokyo 106-8620 (JP)
(72) Inventor: Hiraguchi, Kazuo, Odawara-shi Kanagawa (JP); Morita, Kiyoo, Odawara-shi Kanagawa (JP); Takenoshita, Kenji, Odawara-shi Kanagawa (JP)
(74) Representative: Grünecker, Kinkeldey, Stockmair & Schwanhäusser Anwaltssozietät

(56) References cited:
- EP-A- 1 715 488
- US-A1- 2003 106 953
- US-A1- 2003 122 016
- US-A1- 2004 041 051
- US-A1- 2004 149 851
- US-A1- 2006 071 109

## Description

The present invention relates to a method for manufacturing a leader member according to the preamble of claim 1. that is attached to the leading end of a recording tape wound around a reel in a case, and to a recording tape cartridge provided with the leader member manufactured according to the method.

Such a method for manufacturing a leader member, according to the preamble of claim 1, is already known from US 2004/149851 A1.

EP 1 715 488 A1 discloses a recording tape cartridge, according to the preamble of claim 4, comprising a case; a single reel, rotatably housed in the case; a recording tape wound around the reel; a leader member, wherein a leading end of the recording tape is connected to the tape connecting portion and the second rim portions are provided at both sides of the recording tape in a widthwise direction thereof; an opening portion provided in the case for inserting and removing the leader member and a pair of wall portions respectively forming housing portions that open facing the opening portion to allow entry and exit of the first rim portions at both sides of the case in the longitudinal direction of the axis portion.

US 2003/122018 A1 discloses a recording tape cartridge including one overhanging portion.

A magnetic tape cartridge is known where a leader pin is attached to the leading end of a magnetic tape wound around a single reel that is housed inside a case. Fixing portions formed to stick out from both ends in the longitudinal direction of this leader pin are caught in undercut grooves formed in the upper and lower walls of the case, whereby the leader pin is held at the case (see, for example, the Japanese Patent Application Laid-Open (JP-A) No. 2001-148179). In this magnetic tape cartridge, tilt of the leader pin relative to the case and widening of the opening portion (non-joined portion) for taking out and putting in the leader pin at the case can be prevented.

Nonetheless, in the conventional magnetic tape cartridge as described above, the fixing portions at both ends of the leader pin are formed into reverse circular spindle shapes or into step forms. Accordingly, the parts of the fixing portions at both ends with the greatest diameters become thinner, so the fixing portions at both ends deform due to chucking and shaving during the manufacturing process of the leader pin by cutting. Accordingly, there is a risk of deterioration in precision of the dimensions of the fixing portions, which are the positioning portions of the leader pin relative to the case.

In light of the above-described circumstances, the present invention seeks to provide a method for manufacturing a leader member where dimension precision can be ensured even if first rim portions thereof are formed to be thin; and a recording tape cartridge where the above-described leader member manufactured according to the inventive method is applied and tilt of the leader member relative to the case can be prevented.

The above and other objects of the invention are achieved by a method for manufacturing a leader member according to claim 1 and a recording tape cartridge according to claim 4. Preferred embodiments are claimed in the dependent claims.

The leader member manufactured according to the method of claim 1 has a pair of first rim portions and second rim portions and these are configured to stick out from the outer side portions of the tape-connecting portion on the axis portion. Each part of this leader member is formed by cut processing from, for example, a bar material (wire rod). At this time, the leader member prior to completion is held at the first rim portions in order to process the end surface of at least one of the first rim portions (i.e., the end surface in the longitudinal direction of the axis portion). Here, in this leader member, the dimensions of the first rim portions and the second rim portions in a specific direction among the directions along the surface orthogonal to the longitudinal direction of the axis portion are equal. For this reason, the load for holding the leader member prior to completion can be supported at the pair of the first rim portions and the second rim portions. Accordingly, the holding load is dispersed at the pair of the first rim portions and the second rim portions, deformation of the first rim portions of the leader member prior to completion is prevented while the leader member is stably held, and processing can be performed with the desired precision, even if the pair of rim portions is configured to be thin.

In this manner, with the leader member manufactured according to the method of claim 1, dimension precision can be ensured even if the first rim portions are made thin. Note that it is preferable that the second rim portions each be provided between each of the first rim portions and the tape-connecting portion.

A method of a second aspect of the present invention is characterized that the outer peripheral edges of the first rim portions and the second rim portions are respectively formed into circular shapes that are coaxial to each other when viewed from an axial direction, and diameters thereof are equal to each other.

In the method according to claim 2, the dimensions of the pair of first rim portions and second rim portions in each direction along the surface orthogonal to the longitudinal direction of the axis portion are the same. For this reason, there are no constraints in the direction where the leader member prior to completion is held, and the workability at the time of manufacture is good.

The method according to claim 3 is characterized in that the second rim portions are provided with straight portions at peripheries thereof.

A recording tape cartridge according to claim 4 comprises: a case; a single reel, rotatably housed in the case; a recording tape, wound around the reel; the leader member manufactured according to the method of the present invention, wherein a leading end of the recording tape is connected to the tape-connecting portion and the second rim portions are provided at both sides of the recording tape in a widthwise direction thereof; an opening portion, provided in the case for inserting and removing the leader member; a pair of wall portions, respectively forming housing portions at both sides of the case in the longitudinal direction of the axis portion, that open facing the opening portion to allow entry and exit of the first rim portions; and overhanging portions that respectively overhang the pair of wall portions toward the housing portions sides and enter spaces between the first rim portions positioned in the housing portions and the second rim portions.

In the recording tape cartridge of the claim 4, when reading/writing of data to the recording tape is performed, the pullout mechanism of the drive device operates (holds) the leader member and pulls the recording tape from the case through the opening portion. The pullout mechanism of the drive device can operate (hold) the axis portion, between the first rim portions and second rim portions at the leader member. When not in use, the leader member is supported in the case in a position where the pair of first rim portions are housed in corresponding housing portions of the case. With this position, movement of each first rim portion is restricted, except for the direction toward the opening side of the housing portions, in the direction orthogonal to the longitudinal direction of the axis portion.

Here, the overhanging portion that sticks out from wall portion that form the above-described housing portion enters between the first rim portion and the second rim portion in the housing portion, so the leader pin is restricted from tilt toward the opening side because the first rim portion engage with the overhanging portion. Accordingly, changes in position of the leader member relative to the case are prevented. Further, deformation of the case results in the changes in position of the leader pin relative to the case is suppressed due to the engaging of the first rim portions of the leader pin and the overhanging portions of the case.

A recording tape cartridge according to claim 5 is characterized that the overhanging portions are provided to extend integrally from each end portion of the pair of wall portions and are formed into substantially U-shapes when seen in plan view (from the underside), and further are configured such that interference with the axis portion associated with advancement and retraction of the first rim portions with respect to the housing portion is prevented.

A recording tape cartridge according to claim 6 is characterized that the overhanging portions are formed by fixing plate-shaped members for forming overhanging portions respectively to the pair of wall portions, wherein the members for forming overhanging portions are formed integrally from U-shaped portions that form substantially U-shapes when seen in plan view (from the underside) and substantially rectangular attaching portions that extend from the U-shaped portions towards an interior of the case.

In this manner, in the recording tape cartridge according to claim 4, the above-described leader member manufactured according to the method of the present invention is applied and tilt of the leader member relative to the case can be prevented.

The leader member manufactured according to the method of the present invention, as described above, has an effect in that dimension precision can be ensured even if the first rim portions are formed to be thin. Also, the recording tape cartridge according to the present invention where the above-described leader member manufactured according to the inventive method is applied has an effect in that tilt of the leader member relative to the case can be prevented in a case can be prevented.

An exemplary embodiment of the present invention will be described in detail based on the following figures, wherein:
Fig. 1 is a front view showing a leader pin manufactured according to the method of the present invention.
Figs. 2A - 2D are side views showing respectively the manufacturing processes of the leader pin according to the method of the present invention;
Fig. 3 is a perspective view showing a recording tape cartridge to which the leader pin manufactured according to the method of the present invention is applied;
Fig. 4 is an exploded perspective view showing the recording tape cartridge to which the leader pin manufactured according to the method of the present invention is applied;
Fig. 5 is a front view showing a state where the leader pin manufactured according to the method of the present invention is held in the case;
Fig. 6 is a perspective view showing a pin-receiving portion for holding a leader pin manufactured according to the method of the present invention in a recording tape cartridge according to an exemplary embodiment of the present invention;
Fig. 7 is a frontal drawing showing a pin-receiving portion for holding the leader pin, manufactured according to the method of the present invention in
Fig. 8 is a perspective view showing a modified example of the pin-receiving portion for holding the leader pin, manufactured according to the method of the present invention, in the recording tape cartridge according to the exemplary embodiment of the present invention; and
Figs. 9A - 9D are side views showing respectively the manufacturing processes of a leader pin according to a comparative example.

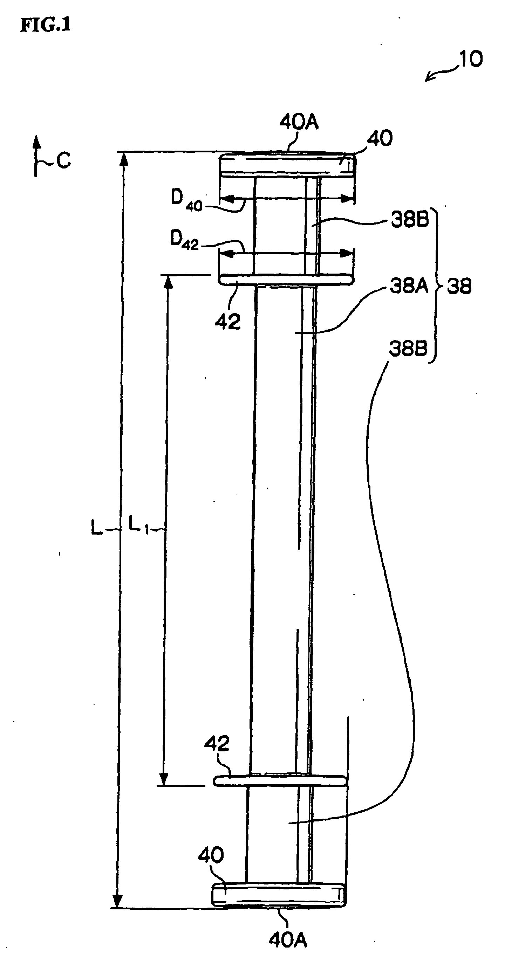

Explanations will be given regarding a leader pin 10 that acts as a leader member manufactured according to the method of the present invention and a recording tape cartridge 11 to which the leader pin 10 is applied, based on Figs. 1 - 7. Firstly, the overall configuration of the recording tape cartridge 11 will be explained, and then the detailed structure and the holding structure of the leader pin 10 and the operational effect of the recording tape cartridge 11 will be explained. After that, the method of manufacturing the leader pin 10 and the operational effect thereof will be explained in detail. Note that for the sake of ease of explanation, a loading direction shown with an A arrow in which the recording tape cartridge 11 is loaded into a drive device is set to be a front direction (front side) and B and C arrows orthogonal to the A arrow are respectively set to be a right direction and an up direction.

### [Configuration of the Recording Tape Cartridge]

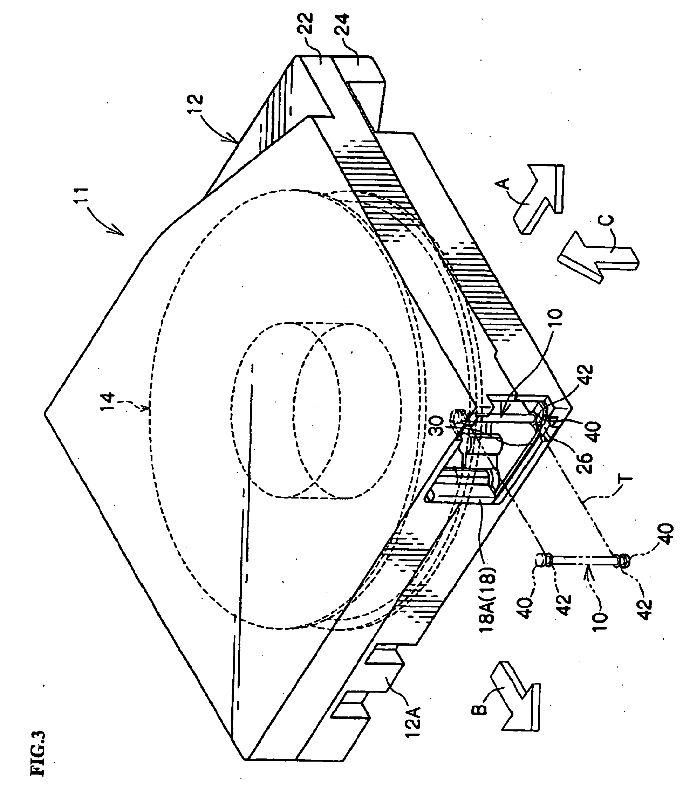

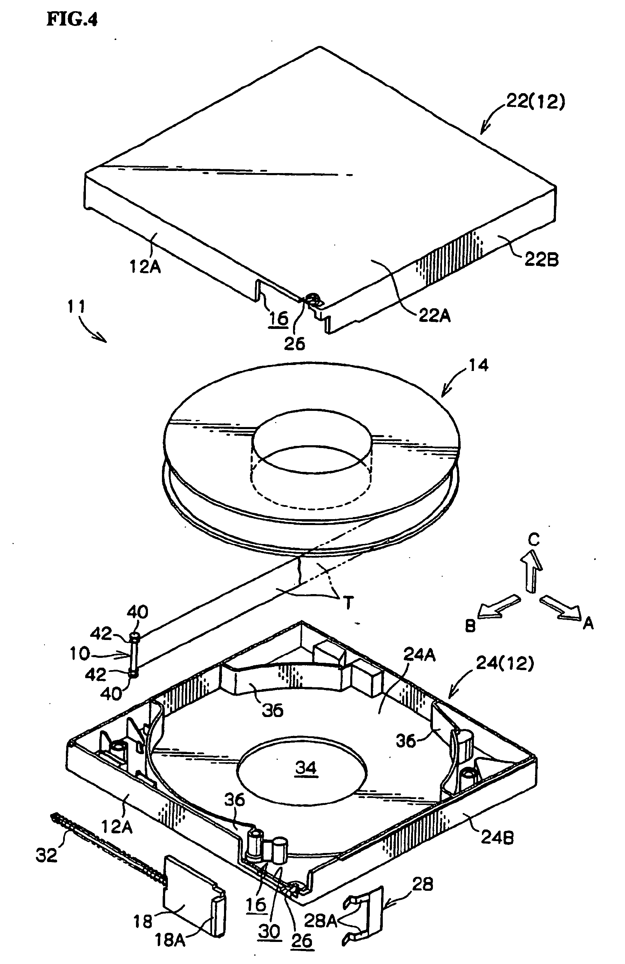

The overall configuration of the recording tape cartridge 11 is shown as a perspective view in Fig. 3 and a schematic exploded perspective view of the recording tape cartridge 11 is shown in Fig. 4. As shown in these figures, the recording tape cartridge 11 is configured such that a single reel 14, having a magnetic tape T that acts as a recording tape that is a data recording/ playback medium wound thereon, is rotatably housed in a case 12 (which when seen in plan view has a rectangular shape).

An opening portion 16 for pulling out the magnetic tape T from the case 12 is provided in the front-end portion of the right side wall of the case 12. This opening portion 16 is closed by a door 18 when the recording tape cartridge 11 (magnetic tape T) is not in use, and is opened inside the drive device when the recording tape cartridge 11 is in use. In addition, the leader member that is formed to include the leader pin 10, which will be described later, is attached to the leading end of the magnetic tape T. For example, for the leader member, the leader pin 10 can be used that is connected directly to the leading end of the magnetic tape T, and a combined component can be used where a leader tape has one end connected to the leading end of the magnetic tape T and the other end of the leader tape is connected to the leader pin 10. When the recording tape cartridge 11 is loaded into the drive device, this leader pin 10 is hooked by a pullout mechanism of the drive device so that the magnetic tape T is pulled out from the case 12.

The case 12 is formed by joining an upper case 22 with a lower case 24. The upper case 22 is formed such that a peripheral wall 22B that is substantially frame-shaped is erectly provided along the outer edges of a top plate 22A that is substantially rectangular when seen in plan view. The lower case 24 is formed such that a peripheral wall 24B is erectly provided along the outer edges of a bottom plate 24A whose form corresponds substantially to that of the top plate 22A. And the upper case 22 and the lower case 24 are joined by ultrasonic adhesion or screw cramp and the like in a state where the opening end of the peripheral wall 22B and the opening end of the peripheral wall 24B abut each other. The case 12 thus is formed in a substantially flat rectangular box form in a vertical direction.

The opening portion 16 is formed into a substantially rectangular form when viewed from the side. The opening portion 16 opens toward the right at the front end of a right side wall 12A that follows along the direction of the A arrow in the case 12 (at the wall that faces the right of the case 12 formed by the peripheral wall 22B and the peripheral wall 24B). Pin-receiving portions 26 that respectively house outer flanges 40 (to be described later) of the erectly standing leader pin 10 are provided in the top plate 22A and bottom plate 24A. Detailed descriptions will be provided later but each pin-receiving portion 26 opens toward the right at the front-end vicinity of the opening portion 16, i.e., opens facing the opening portion 16. Entry and exit of the leader pin 10 relative to the case 12 by going through the opening portion 16 is thus made possible.

A plate spring 28 is also attached to the front-end vicinity of the case 12 and a pair of upper and lower arms 28A are provided at the plate spring 28. The plate spring 28 is made so that the leading ends of each of the arms 28A are made to engage with the right front portions of the outer flanges 40 (to be described later) of the leader pin 10, whereby the leader pin 10 is held relative to the case 12. This holding state is configured to be released by pulling the leader pin 10 with a force greater than or equal to a predetermined value toward the right direction.

The door 18 that opens and closes this opening portion 16 is formed into a substantially rectangular flat plate that can independently close the opening portion 16. Upper and lower end portions of the door 18 are slidably inserted in guide grooves 30, wherein the guide grooves 30 are provided in the top plate 22A and bottom plate 24A along the opening surface of the opening portion 16 and the right side wall 12A. Due to this, the door 18 slides in a front-rear direction while being guided by the guide grooves 30, whereby the configuration is such that the door 18 can selectively take a closing position that closes the opening portion 16 and an opening position that opens the opening portion 16. The door 18 is biased frontward by a coil spring 32 that is a biasing member provided between the door 18 and the case 12 so that ordinarily, the door 18 is positioned in the closing position due to this biasing force. An operation portion 18A is provided to project to the right at the front end of the door 18, and by pressing this operation portion 18A toward the rear, the door 18 resists the biasing force of the coil spring 32 so that it can be moved to the opening position.

In addition, a gear opening 34 is provided in the central portion of the bottom plate 24A of the case 12 in order to expose a reel gear (not shown) of the reel 14. A drive gear of the drive device meshing with the reel gear rotates, whereby the reel 14 is configured to be driven rotationally without contacting inside the case 12. Inductive regulating walls 36 are also provided in the case 12 and configured to erectly stand partially from the top plate 22A and the bottom plate 24A along a circular periphery that is coaxial to the gear opening 34, while the upper and lower ends thereof matching each other. The inductive regulating walls 36 are configured to suppress the rattle of the reel 14, and the end portions thereof connect with the peripheral walls 22B, 24B so as to prevent the intrusion of debris and the like into the equipment region of the reel 14.

### (Configuration of the Leader Pin)

The leader pin 10 is shown in Fig as a front view. 1. As shown in this figure, the leader pin 10 is configured so that the main portions thereof comprise: an axis portion 38 that is formed into a substantially straight-lined bar; a pair of upper and lower outer flanges 40 acting as first rim portions that are each provided to extend from both ends in the longitudinal direction of the axis portion 38; and a pair of upper and lower inner flanges 42 acting as second rim portions that are provided to extend from the inner sides of each of the outer flanges 40 at the axis portion 38.

The axis portion 38 is formed into a small circular cylinder shape. Also, as shown in Figs. 3 and 4, the longitudinal direction of the axis portion 38 conforms with the widthwise direction of the magnetic tape T. Next, returning to Fig. 1, the inner side portion of the pair of upper and lower inner flanges 42 on the axis portion 38 is a tape-connecting portion 38A to which the magnetic tape T is connected. This is designed in such a way that the leading end of the magnetic tape T is connected by a clamp member whose cross-sectional surface is formed into a substantially C-shape (not shown). In addition, the portions of the axis portion 38 between the pairs of upper and lower outer flanges 40 and inner flanges 42 are hooked portions 38B that are hooked by the pullout mechanism of the above-described drive device.

The pair of upper and lower outer flanges 40 form small circular plate shapes that each project in a radial direction of the axis portion 38 towards the outer side (the direction along the surface orthogonal to the longitudinal direction of the axis portion 38). The diameter D₄₀ for each of the outer flanges 40 is approximately set to be3.225mm and the thickness t₄₀ (the greatest thickness) is approximately set to be 0.58mm. An end surface 40A of each outer flange 40 is corner-rounding processed so as to form a spherical surface. In this exemplary embodiment, the corner-rounding processing with a 15mm radius is performed and the length (the smallest thickness) of each outer flange 40 along the longitudinal direction of the axis portion 38 at the outer peripheral surface of each outer flange 40 is approximately set to be 0.5mm.

Also, the pair of upper and lower inner flanges 42 form small circular plate shapes that each project in the radial direction of the axis portion 38 towards the outer side (the direction along the surface orthogonal to the longitudinal direction of the axis portion 38). Each of the inner flanges 42 has a diameter D₄₂ that is approximately set to be 3.225mm and the thickness t₄₂ (the greatest thickness) is approximately set to be 0.225mm. Both end portions in the longitudinal direction of the axis portion 38 at the outer peripheral portion of each of the inner flanges 42 are corner-rounding processed and the length (the smallest thickness) of each inner flange 42 along the longitudinal direction of the axis portion 38 at the outer peripheral surface of each inner flange 42 is approximately set to be 0.2mm.

The total length L of the leader pin 10 along the longitudinal direction of the axis portion 38 is approximately set to be 19.46mm. In the leader pin 10, the distance L1 between the outer side surfaces of the pair of upper and lower inner flanges 42 (i.e., the sum of the length of the tape-connecting portion 38A and the thicknesses of the pair of upper and lower inner flanges 42) is approximately set to be 13.225mm. This leader pin 10 can be used for a magnetic tape T whose dimension in the widthwise direction is approximately 12.65mm.

In the leader pin 10, as described above, the outer diameter D₄₀ of the pair of upper and lower outer flanges 40 and the outer diameter D₄₂ of the pair of upper and lower inner flanges 42 are both approximately 3.225mm and are set to be mutually equal. Note that in this exemplary embodiment, the diameter of the tape-connecting portion 38A of the axis portion 38 is approximately 1.5mm and the hooked portion 38B has a diameter that is approximately 1.6mm (a different diameter from that of the tape-connecting portion 38A).

Each portion of the leader pin 10 explained above is integrally formed from a steel material such as stainless steel (nonmagnetic SUS303). The method for manufacturing the leader pin 10 will be described later.

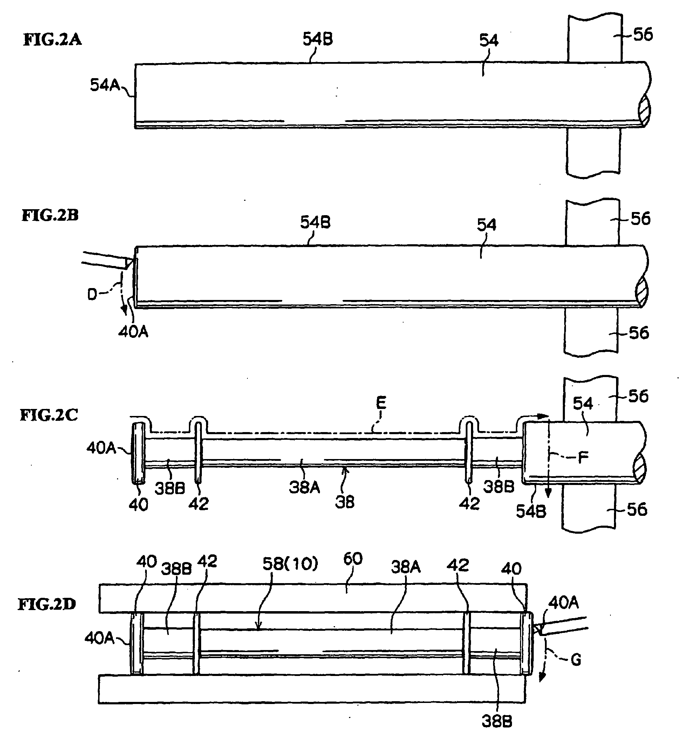

Further, the inner flanges 42 are provided with straight portions at the peripheries thereof as shown in Fig. 2C.

### (Holding Structure of the Leader Pin)

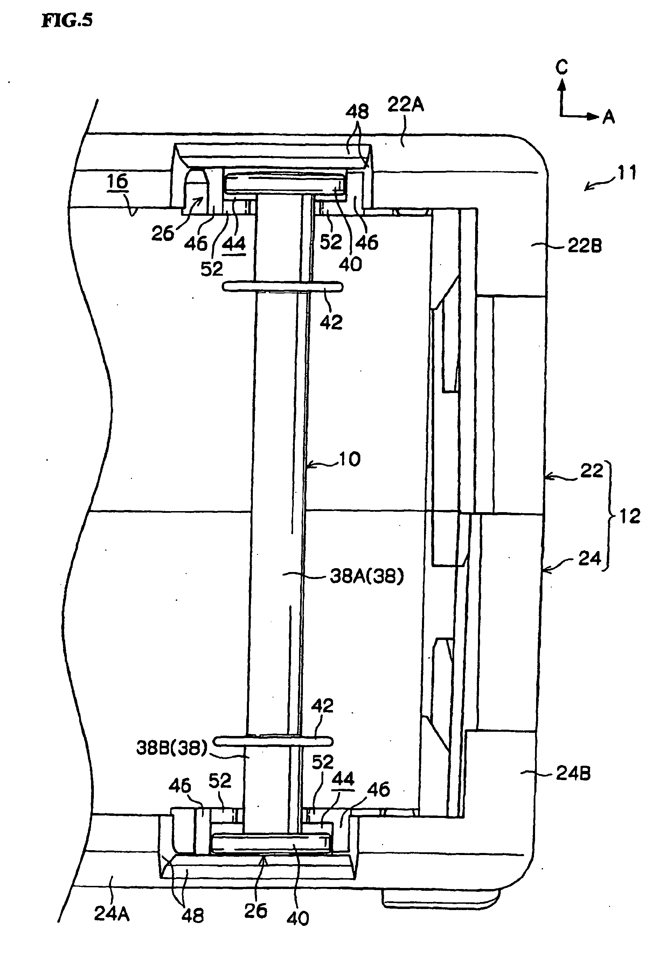

The leader pin 10 of the above-described configuration is made to be held with respect to the case 12 by the pair of upper and lower outer flanges 40 being accommodated in the corresponding pin-receiving portions 26 of the case 12, as is shown in Fig. 5. Hereafter, each of the pin-receiving portions 26 will be explained. The upper and lower pin-receiving portions 26 are essentially configured symmetrically so explanations will be given for mainly one of the pin-receiving portions 26.

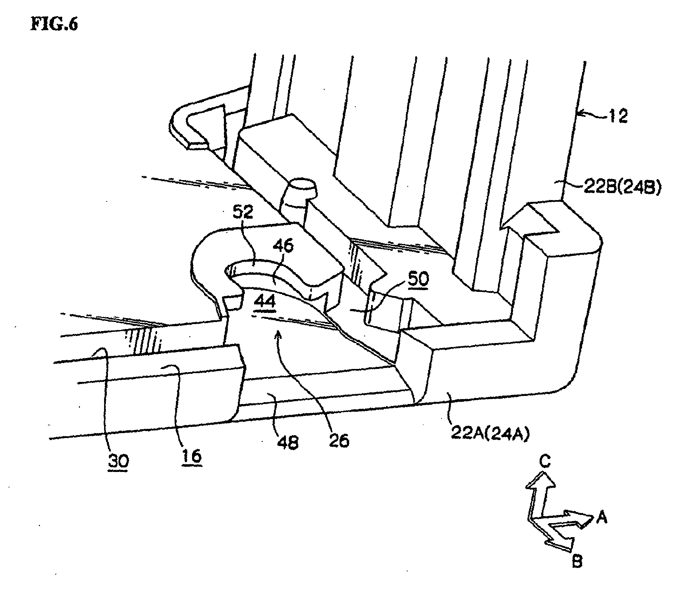

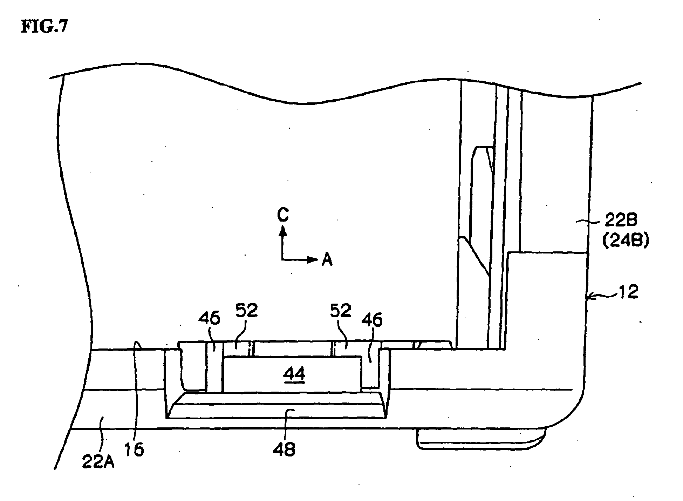

As shown in Figs. 6 and 7, the pin-receiving portion 26 has a housing recessed portion 44 at the inner side of the case 12 that opens toward the open surface side (the right side)of the opening portion 16. The housing recessed portion 44 acts as a housing portion that opens so that the outer flange 40 can advance and retract. The housing recessed portion 44 is formed to be surrounded by a wall portion 46 that appears substantially U-shape when seen in plan view (when viewed the bottom surface). A guiding recessed portion 48 is arranged to continue with the opening end side of the housing recessed portion 44 in order to lead the outer flange 40 of the leader pin 10 from the opening portion 16 to the housing recessed portion 44.

As shown in Fig. 6, the guiding recessed portion 48 is formed to be a tapered shape when seen in plan view so that the width of the opening gradually widens from the housing recessed portion 44 to the opening portion 16. The guide groove 30 that guides the door 18 and a spring groove 50 that makes the arm 28A of the plate spring 28 movably enter into an engaging position with the outer flange 40 inside the housing recessed portion 44, are provided to connect with the guiding recessed portion 48.

The pin-receiving portion 26 also has an overhanging portion 52 that overhangs from the end portion of the wall portion 46 in the vertical direction over to the housing recessed portion 44 and faces opposite the bottom plate 24A (top plate 22A). The overhanging portion 52 is formed into a substantially U-shape when seen in plan view (from the underside) so that interference with the hooked portion 38B associated with the advancement and retraction of the outer flange 40 relative to the housing recessed portion 44 is prevented. As shown in Fig. 5, the overhanging portion 52 is configured to cover the outer flange 40 that has entered into the housing recessed portion 44 from the upper (lower) side. Note that the portion (the U-shaped portion) that faces opposite the overhanging portion 52 at the bottom plate 24A (top plate 22A) is made into a pass-through portion, whereby the overhanging portion 52 can be formed without employing an undercut structure.

The dimensions of each portion of the above-described pin-receiving portion 26 are set such that, when a single outer flange 40 (only one of the upper and lower outer flanges 40) of the leader pin 10 is inserted into the housing recessed portion 44, the tilt of the leader pin 10 in a left-right direction (the direction in which the other outer flange 40, which is not inserted into the other housing recessed portion 44, moves towards the opening portion 16) becomes less than or equal to a predetermined angle (e.g., 7°) due to the outer flange 40 engaging with the overhanging portion 52.

Also, the dimensions of each portion of the pin-receiving portion 26 are set such that, when a single outer flange 40 (only one of the upper and lower outer flanges 40) of the leader pin 10 is inserted into the housing recessed portion 44, the tilt of the leader pin 10 in the front-rear direction (the direction in which the other outer flange 40, which is not inserted into the other housing recessed portion 44, moves towards the front and rear) becomes less than or equal to a different predetermined angle (e.g., 5°) due to the outer flange 40 engaging with the wall portion 46. Namely, the pin-receiving portion 26 is configured so that the outer flange 40 and hooked portion 38B of the leader pin 10 do not interfere with the overhanging portion 52 with respect to the tilt of the leader pin 10 in the front-rear direction.

Due to this, in the recording tape cartridge 11, the leader pin 10 is configured to maintain its standing position relative to the case 12 (does not collapse in any direction) in a state where the outer flanges 40 have been inserted into the upper and lower pin-receiving portions 26.

### (Operational Effects of the Recording Tape Cartridge)

In the recording tape cartridge 11 where the leader pin 10 with the above configuration and the pin-receiving portions 26 are applied, the recording tape cartridge 11 is loaded to the drive device when data is to be recorded to the magnetic tape T or when data recorded to the magnetic tape T is to be played back. Together with this loading action, the operation portion 18A is pressed by the drive device and the door 18 is moved, thereby opening the opening portion 16. The pullout mechanism that entered into the case 12 from this opening portion 16 hooks and pulls the hooked portion 38B of the leader pin 10, thereby pulling out the magnetic tape T from the case 12 and leading the leading end of the magnetic tape T to a machine reel. After that, the magnetic tape T is pulled out from the case 12 while being wound onto the machine reel, and data is written to or recorded data is read from recording/playback heads arranged along a predetermined tape path. After using the magnetic tape T, the magnetic tape T is wound back onto the reel 14 and returned to its original state. The leader pin 10 is held in the case 12 by inserting each of the outer flanges 40 by the pullout mechanism into the corresponding housing recessed portions 44 of the pin-receiving portions 26.

Here, in the recording tape cartridge 11, the overhanging portion 52 is provided for each pin-receiving portion 26, so tilt or coming off of the leader pin 10 relative to the case 12 is prevented when, for example, there is impact due to the recording tape cartridge 11 being dropped. This is because that tilt of the leader pin 10 in each direction is restricted due to the engagement between the wall portion 46, the overhanging portion 52, and the outer flange 40. Also this is because that the opening deformation of the case 12 (due to dropping impact) in the vicinity of the opening portion 16 where there is no joined portion between the upper case 22 and the lower case 24 is prevented by the engagement between the outer flange 40 and the overhanging portion 52. That is, the opening deformation of the case 12 that causes tilt or coming off of the leader pin 10 relative to the case 12 is prevented by the leader pin 10 itself.

Due to this, in the recording tape cartridge 11, the proper position of the leader pin 10 relative to the case 12 is maintained even after receiving impact from the dropping. Also, the ability of the leader pin 10 to be pulled out securely and properly by the pullout mechanism of the drive device is ensured. Because of this, in the recording tape cartridge 11, it is also possible to make the plate spring 28 for holding the leader pin 10 in the case unnecessary.

### (Method for Manufacturing the Leader Pin)

The manufacturing method of the leader pin 10 with the above-described configuration will be explained based on Figs. 2A - 2D. In manufacturing the leader pin 10, a cylindrical steel material (a bar or wire rod material) 54 is nipped and held by a bush 56 and corner-rounding processing is performed on an end surface 54A of the steel material 54 in the direction of the D arrow as shown in Fig. 2B. Due to this, a spherical end surface 40A that forms the outer flange 40 on one side is formed. Next, as shown with the E arrow in Fig. 2C, a peripheral surface 54B of the steel material 54 is cut and then one of the outer flanges 40, one of the hooked portions 38B, one of the inner flanges 42 and the tape-connecting portion 38A, and then the other inner flange 42 and the other hooked portion 38B are consecutively formed. Also, after forming the peripheral surface of the other outer flange 40, the steel material 54 is cut along a surface orthogonal to the axial line, as shown with the F arrow.

Next, as shown in Fig. 2D, a post-cut semi-manufactured product 58 is nipped and held (chucked) by a sub-chuck 60. The sub-chuck 60 nips the peripheral surfaces of both one outer flange 40 and the other outer flange 40 so that a cut surface 58A of the post-cut semi-manufactured product 58 (steel material 54) projects so that processing can be performed thereon. Then, as shown with the G arrow in the same figure, corner-rounding processing is performed on the cut surface 58A of the post-cut semi-manufactured product 58 (steel material 54). Due to this, the end surface 40A of the other outer flange 40 is formed and the leader pin 10 (outer shape thereof) is completed.

### (Operational Effect of the Leader Pin)

Here, in the leader pin 10, since the outer flanges 40 and the inner flanges 42 are configured to have the same diameters, when the outer flanges 40 and the inner flanges 42 are held by the sub-chuck 60 as shown in Fig. 2D, the holding load due to the sub-chuck 60 can be dispersed at each of the outer flanges 40 and the inner flanges 42 and thus supported. Because of this, deformation of the outer flanges 40 is suppressed and the processability by cutting is ensured, even when the leader pin 10 has outer flanges 40 that have been made thin.

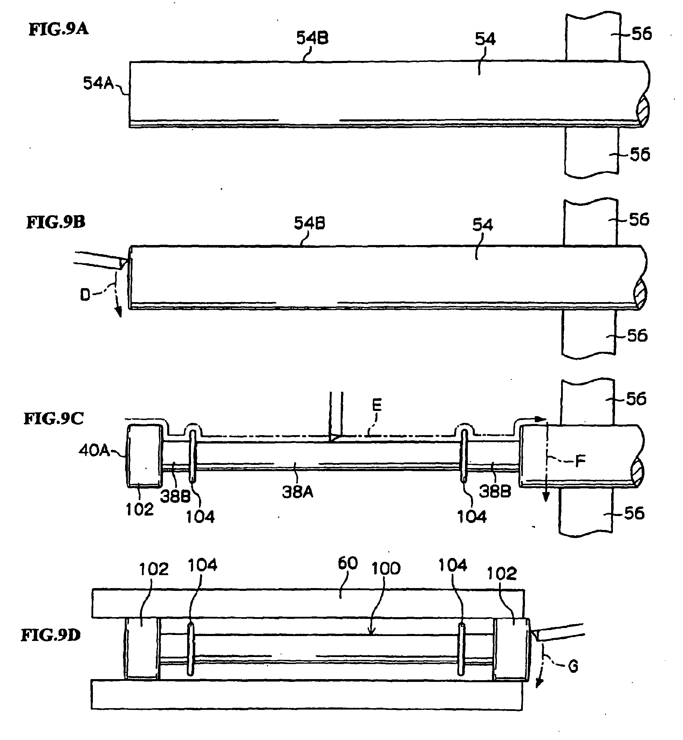

For example, in a leader pin 100 applied to a recording tape cartridge having no overhanging portion 52 in the pin-receiving portion 26, as shown in Fig. 9D, thick outer flanges 102 (of approximately 1.5mm) are provided in place of the outer flanges 40, so the holding load due to the sub-chuck 60 can be supported by the outer flanges 102. Because of this, the leader pin 100 has a pair of inner flanges 104 whose diameters are smaller than those of the outer flanges 102, in place of the inner flanges 42. Note that Figs. 9A - 9C show that the leader pin 100 is manufactured in almost the exact same way as the leader pin 10.

When setting the pin-receiving portion 26s having the overhanging portions 52 in the case 12 of the recording tape cartridge 11 and trying to manufacture a leader pin 10 having the thin outer flanges 40, if the outer flanges 102 of the leader pin 100 are simply caused to be thin, it is concerned that the holding load due to the sub-chuck 60 cannot be supported and plastic deformation (permanent deformation) is generated in the outer flanges 40, further the dimension precision of the outer flanges 40 is deteriorated by processing the end surface 40A in a state where the outer flanges 40 are plastically deformed. The plastic deformation and deterioration in dimension precision of these outer flanges 40 become the causes of the deterioration of the positioning precision with respect to the case 12 of the leader pin 10 (hooked portions 38B). For this reason, as a measure for making the outer flanges 102 thinner, a sub-chuck for holding the tape-connecting portion 38A or for holding the tape-connecting portion 38A together with the outer flanges 40 becomes necessary, or a holding member that is set between the tape-connecting portion 38A and the sub-chuck becomes necessary.

In contrast, in the leader pin 10, the outer diameter D₄₂ of the inner flanges 42 is set to be the same as that of the outer diameter D₄₀ of the outer flanges 40, whereby, as described above, the inner flanges 42 can be used as supporting portions of the holding load. Further, the generation of plastic deformation on the outer flanges 40 and deterioration of the dimension precision of the outer flanges 40 can be prevented. In addition, it is possible to manufacture the leader pin 10 that is applied to the recording tape cartridge 11 that has the overhanging portion 52, without bringing big changes to the manufacturing process or the manufacturing equipment for the leader pin 100.

Moreover, in the leader pin 10, straight portions may be provided on the inner flanges 42 at the peripheries thereof. Accordingly, deformation of the flanges, that may occur in spite of the sub-chuck 60 holding the flanges as shown in Fig. 2D, can be prevented, and the holding of the sub-chuck 60 with respect to the flanges can be stabilized.

### (Modified Example of the Holding Structure of the Leader Pin)

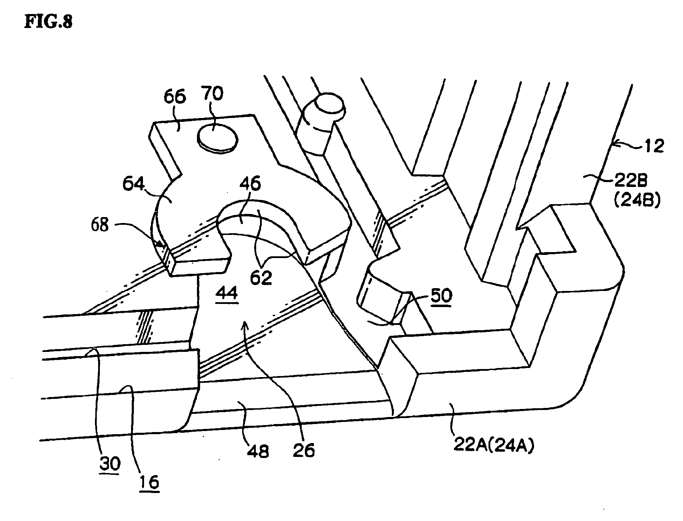

A modified example of the pin-receiving portion 26 provided in the recording tape cartridge 11 is shown as a perspective view in Fig. 8. In the explanation below, the components and portions that are basically the same as those in the above-described first exemplary embodiment are assigned the same numbers as in the first exemplary embodiment and explanations thereon will be omitted. As shown in Fig. 8, the pin-receiving portion 26 according to this modified example differs from the above-described exemplary embodiment in that in place of the overhanging portion 52 extending integrally from the end portion of the wall portion 46, an overhanging portion 62 is formed as a separate member from the wall portion 46, i.e., from the case 12 (the upper case 22, lower case 24).

Plate-shaped members 68 for forming overhanging portions, which is formed integrally by a U-shaped portion 64 that forms a substantially U-shape when seen in plan view (from the underside) and a substantially rectangular attaching portion 66 that is set to extend from the U-shaped portion 64 towards the interior of the case (toward the left), are fixed to the top plate 22A and bottom plate 24A, whereby the upper and lower overhanging portions 62 are formed. Specifically, a caulked portion 70 of the case 12 passing through the attaching portion 66 is caulked and thus the member 68 for forming overhanging portions is fixed to the case 12. In this state, a portion of the inner edge side of the U-shaped portion 64 overhanging towards the inner side of the housing recessed portion 44 becomes the overhanging portion 62. The member 68 for forming overhanging portions can be formed from a material such as metal.

In the pin-receiving portions 26 according to the modified example explained above, the overhanging portion 62 is formed by fixing the member 68 for forming overhanging portions that is a separate member from the case 12. Therefore, the overhanging portions 62 can be provided without forming undercut portions at the upper case 22 and lower case 24. In addition, if the member 68 for forming overhanging portions is formed from a metal plate and the like, the overhanging portions 62 can be configured to have high rigidity and strength.

Note that in the above-described exemplary embodiment, an example is shown where the leader pin 10 is provided with discoid outer flanges 40 and inner flanges 42, however, the present invention is not thus limited. For example, various types of outer flanges 40 and inner flanges 42 can be applied with shapes such as polygons like rectangular and hexagonal shapes, or elliptic shapes, or shapes having concave forms in the peripheral surface, etc. In these cases, the outer flanges 40 and the inner flanges 42 just need be formed so as to disperse and support the holding load of the common sub-chuck 60.

In addition, in the above-described exemplary embodiment, an example is shown where the end surface 40A of each outer flange 40 is formed into a spherical surface, however, the present invention is not thus limited. For example, it is also possible to make a configuration where chamfering or corner-rounding processing is performed only to the outer peripheral portions of the axial end portions of the outer flanges 40.

## Claims

1. A method for manufacturing a leader member comprising an axis portion (38), formed into a bar shape that is longer than a width of a recording tape (T), a center portion in a longitudinal direction thereof being a tape-connecting portion (38A) for connecting the recording tape (T);
a pair of first rim portions (40), overhanging from both outer sides of the tape-connecting portion (38A) on the axis portion (38) in directions orthogonal to the longitudinal direction of the axis portion (38); and
second rim portions (42), overhanging in the directions orthogonal to the longitudinal direction of the axis portion (38) from between at least one of the pair of first rim portions (40) on the axis portion (38) and the tape-connecting portion (38A), wherein
the method comprises nipping one end portion of a base material (54) for manufacturing the leader member with a bush (56) and processing an end surface of the other end portion;
sequentially forming from the other end portion the first rim portion (40) of one side, the second rim portion (42) of one side, the tape-connecting portion (38A), and the second rim portion (42) of the other side, by cutting a peripheral surface of the base material (54);
cutting off the base material (54) along a surface orthogonal to the longitudinal direction of the axis portion after a peripheral surface of the first rim portion (46) of the other side is formed at the one end portion of the base material (54) nipped by the bush (56);
**characterized in that**
a dimension (D₄₂) of the second rim portions (42) along a specific direction among the orthogonal directions being equal to a dimension (D₄₀) along the specific direction of the first rim portions (40); and
**in that** the method comprises the steps of:
nipping, with a sub-chuck (60), the peripheral surfaces of the first rim portions (46) and the second rim portions (42) with the same dimension along the specific direction, and processing the end surface of the first rim portion (40) of the other side at the one end portion.

2. The method according to claim 1, wherein outer peripheral edges of the first rim portions (40) and the second rim portions (42) are respectively formed into circular shapes that are coaxial to each other when viewed from an axial direction, and diameters (D₄₀, D₄₂) thereof are equal to each other.

3. The method according to claim 1 or claim 2, wherein the second rim portions (42) are provided with straight portions at peripheries thereof.

4. A recording tape cartridge, comprising:
a case (12);
a single reel (14), rotatably housed in the case (12);
a recording tape (T), wound around the reel (14);
the leader member (10) manufactured according to the method of any one of claims 1 to 3, wherein a leading end of the recording tape (T) is connected to the tape-connecting portion (38A) and the second rim portions (42) are provided at both sides of the recording tape (T) in a widthwise direction thereof;
an opening portion (16), provided in the case (12) for inserting and removing the leader member (10); and
a pair of wall portions (46), respectively forming housing portions, that open facing the opening portion (16) to allow entry and exit of the first rim portions (40), at both sides of the case (12) in the longitudinal direction of the axis portion,
**characterized in that** the recording tape cartridge further comprises
overhanging portions (52,62) that respectively overhang the pair of wall portions (46) toward the housing portions sides and enter spaces between the first rim portions (46) positioned in the housing portions and the second rim portions (42).

5. The recording tape cartridge of claim 4, wherein the overhanging portions (52) are provided to extend integrally from each end portion of the pair of wall portions (46) and are formed into substantially U-shapes when seen in plan view (from the underside), and further are configured such that interference with the axis portion (38) associated with advancement and retraction of the first rim portions (40) with respect to the housing portion is prevented.

6. The recording tape cartridge of claim 4, wherein the overhanging portions (62) are formed by fixing plate-shaped members (68) for forming overhanging portions respectively to the pair of wall portions (46), wherein the members (68) for forming overhanging portions are formed integrally from U-shaped portions (64) that form substantially U-shapes when seen in plan view (from the underside) and substantially rectangular attaching portions (66) that extend from the U-shaped portions (64) towards an interior of the case (12).

## Patentansprüche

1. Verfahren zum Herstellen eines Vorlaufelementes, das einen Achsenabschnitt (38), der in einer Stabform ausgebildet ist, die länger ist als eine Breite eines Aufzeichnungsbandes (T), wobei ein Mittelabschnitt desselben in einer Längsrichtung ein Bandverbindungsabschnitt (38a) zum Verbinden mit dem Aufzeichnungsband (T) ist;
ein Paar erster Randabschnitte (40), die von beiden Außenseiten des Bandverbindungsabschnitts (38A) an dem Achsenabschnitt (38) in Richtungen rechtwinklig zu der Längsrichtung des Achsenabschnitts (38) vorstehen; und
zweite Randabschnitte (42) umfasst, die in den Richtungen rechtwinklig zu der Längsrichtung des Achsenabschnitts (38) zwischen wenigstens einem des Paars erster Randabschnitte (40) an dem Achsenabschnitt (38) und dem Bandverbindungsabschnitt (38A) vorstehen, wobei
das Verfahren Einklemmen eines Endabschnitts eines Grundmaterials (54) zum Herstellen des Vorlaufelementes mit einer Buchse (56) und Bearbeiten einer Endfläche des anderen Endabschnitts;
sequenzielles Ausbilden des ersten Randabschnitts (40) einer Seite, des zweiten Randabschnitts (42) einer Seite, des Bandverbindungsabschnitts (38A) sowie des zweiten Randabschnitts (42) der anderen Seite von dem anderen Endabschnitt her durch Schneiden einer Umfangsfläche des Grundmaterials (54); und
Abschneiden des Grundmaterials (54) entlang einer Fläche rechtwinklig zu der Längsrichtung des Achsenabschnitts nach Ausbilden einer Umfangsfläche des ersten Randabschnitts (46) der anderen Seite an dem durch die Buchse (56) eingeklemmten einen Endabschnitt des Grundmaterials (54) umfasst;
**dadurch gekennzeichnet, dass**
eine Abmessung (D₄₂) der zweiten Randabschnitte (42) entlang einer bestimmten Richtung der rechtwinkligen Richtungen einer Abmessung (D₄₀) der ersten Randabschnitte (40) entlang der bestimmten Richtung gleich ist; und
**dadurch**, dass das Verfahren die folgenden Schritte umfasst:
Einklemmen der Umfangsflächen der ersten Randabschnitte (46) und der zweiten Randabschnitte (42) mit der gleichen Abmessung entlang der bestimmten Richtung mit einer Teil-Einspanneinrichtung (60) und Bearbeiten der Endfläche des ersten Randabschnitts (40) der anderen Seite an dem einen Endabschnitt.

2. Verfahren nach Anspruch 1, wobei Außenumfangskanten der ersten Randabschnitte (40) und der zweiten Randabschnitte (42) jeweils in Kreisformen ausgebildet sind, die, aus einer axialen Richtung gesehen, koaxial zueinander sind, und wobei Durchmesser (D₄₀, D₄₂) derselben einander gleich sind.

3. Verfahren nach Anspruch 1 oder Anspruch 2, wobei die zweiten Randabschnitte (42) an ihrem Umfang mit geraden Abschnitten versehen sind.

4. Aufzeichnungsbandkassette, die umfasst:
ein Gehäuse (12);
eine Einzelspule (14), die drehbar in dem Gehäuse (12) aufgenommen ist;
ein Aufzeichnungsband (T), das auf die Spule (14) aufgewickelt ist;
das Vorlaufelement (10), das gemäß dem Verfahren nach einem der Ansprüche 1 bis 3 hergestellt wird, wobei ein vorderes Ende des Aufzeichnungsbandes (T) mit dem Bandverbindungsabschnitt (38A) verbunden ist und die zweiten Randabschnitte (42) an beiden Seiten des Aufzeichnungsbandes (T) in einer Breitenrichtung desselben vorhanden sind;
einen Öffnungsabschnitt (16), der in dem Gehäuse (12) zum Einführen und Entfernen des Vorlaufelementes (10) vorhanden ist; und
ein Paar Wandabschnitte (46), die jeweils Aufnahmeabschnitte bilden, die sich dem Öffnungsabschnitt (16) zugewandt öffnen, um Eintreten und Austreten der ersten Randabschnitte (40) zuzulassen, an beiden Seiten des Gehäuses (12) in der Längsrichtung des Achsenabschnitts,
**dadurch gekennzeichnet, dass** die Aufzeichnungsbandkassette des Weiteren umfasst:
vorstehende Abschnitte (52, 62), die jeweils über die paarigen Wandabschnitte (46) auf die Seiten der Aufnahmeabschnitte zu vorstehen und in Zwischenräumen zwischen den ersten Randabschnitten (46), die in den Aufnahmeabschnitten positioniert sind, und den zweiten Randabschnitten (42) eintreten.

5. Aufnahmebandkassette nach Anspruch 4, wobei die vorstehenden Abschnitte (52) so vorhanden sind, dass sie sich integral von jedem Endabschnitt der paarigen Wandabschnitte (46) aus erstrecken, und sie, in Draufsicht (von der Unterseite) gesehen, im Wesentlichen U-förmig ausgebildet sind, und sie des Weiteren so aufgebaut sind, dass Behinderung durch den Achsenabschnitt (38) beim Ausfahren und Einfahren der ersten Randabschnitte (40) in Bezug auf den Gehäuseabschnitt verhindert wird.

6. Aufnahmebandkassette nach Anspruch 4, wobei die vorstehenden Abschnitte (62) ausgebildet werden, indem plattenförmige Elemente (68), die vorstehende Abschnitte bilden, jeweils an den paarigen Wandabschnitten (46) befestigt werden, und die Elemente (68) zum Ausbilden vorstehender Abschnitte integral aus U-förmigen Abschnitten (64), die, in Draufsicht (von der Unterseite her) gesehen, im Wesentlichen U-förmig sind, und aus im Wesentlichen rechteckigen Anbringungsabschnitten (66) gebildet werden, die sich von den U-förmigen Abschnitten (64) auf einen Innenraum des Gehäuses (12) zu erstrecken.

## Revendications

1. Procédé de fabrication d'une pièce d'amorce de bande comprenant une partie axe (38), conformée à la forme d'une barre qui est plus longue que la largeur d'une bande (T) d'enregistrement, une partie centrale dans la direction longitudinale de celle-ci étant une partie (38A) de fixation de bande pour fixer la bande (T) d'enregistrement ;
une paire de premières parties (40) formant collerette, en déport par rapport aux deux côtés externes de la partie (38A) de fixation de bande sur la partie axe (38) dans des directions orthogonales à la direction longitudinale de la partie axe (38) ; et
des secondes parties (42) formant collerette, en déport dans les directions orthogonales à la direction longitudinale de la partie axe (38) à partir d'un emplacement entre au moins l'une de la paire de premières parties (40) formant collerette sur la partie axe (38) et la partie (38A) de fixation de bande,
dans lequel le procédé comprend le pincement, à l'aide d'une douille (56), d'une partie d'extrémité d'une matière première (54) destinée à fabriquer la pièce d'amorce et le façonnage d'une face d'extrémité de l'autre partie d'extrémité ;
la formation séquentielle, à partir de l'autre partie d'extrémité, de la première partie (40) formant collerette d'un côté, de la seconde partie (42) formant collerette d'un côté, de la partie (38A) de fixation de bande, et de la seconde partie (42) formant collerette de l'autre côté, par usinage de la surface périphérique de la matière première (54) ;
la coupe de la matière première (54) suivant une surface orthogonale à la direction longitudinale de la partie axe après avoir formé la surface périphérique de la première partie (46) formant collerette de l'autre côté au niveau de la partie d'extrémité de la matière première (54) pincée par la douille (56) ;
**caractérisé en ce que** la dimension (D₄₂) des secondes parties (42) formant collerette suivant une direction spécifique parmi les directions orthogonales est égale à la dimension (D₄₀) suivant la direction spécifique des premières parties (40) formant collerette ; et
**en ce que** le procédé comprend les étapes consistant :
à pincer, à l'aide d'un mandrin secondaire (60), les surfaces périphériques des premières parties (46) formant collerette et des secondes parties (42) formant collerette qui ont la même dimension suivant la direction spécifique, et le façonnage de la face d'extrémité de la première partie (40) formant collerette de l'autre côté au niveau de la partie d'extrémité.

2. Procédé selon la revendication 1, dans lequel les bords périphériques externes des premières parties (40) formant collerette et des secondes parties (42) formant collerette sont conformés respectivement en des formes circulaires qui sont coaxiales les unes aux autres lorsqu'elles sont vues à partir de la direction axiale, et leurs diamètres (D₄₀, D₄₂) sont égaux les uns aux autres.

3. Procédé selon la revendication 1 ou la revendication 2, dans lequel les secondes parties (42) formant collerette sont pourvues d'une partie droite au niveau de leur périphérie.

4. Cartouche pour bande d'enregistrement, comprenant :
un boîtier (12) ;
une unique bobine (14), logée de façon mobile en rotation dans le boîtier (12) ;
une bande (T) d'enregistrement, enroulée autour de la bobine (14) ;
une pièce (10) d'amorce de bande fabriquée suivant le procédé selon l'une quelconque des revendications 1 à 3, dans laquelle une extrémité d'amorçage de la bande (T) d'enregistrement est fixée à la partie (38A) de fixation de bande et dans laquelle les secondes parties (42) formant collerette sont disposées au niveau des deux côtés de la bande (T) d'enregistrement dans le sens de la largeur de celle-ci ;
une partie (16) formant ouverture, prévue dans le boîtier (12) pour insérer et retirer la pièce (10) d'amorce ; et
une paire de parties (46) formant paroi, formant respectivement des parties formant logement, qui s'ouvrent en face de la partie (16) formant ouverture pour permettre l'entrée et la sortie des premières parties (40) formant collerette, au
niveau des deux côtés du boîtier (12) dans la direction longitudinale de la partie axe,
**caractérisée en ce que** la cartouche de bande d'enregistrement comprend en outre des parties (52, 62) en déport qui surplombent respectivement la paire de parties (46) formant paroi en direction des côtés des parties formant logement et des espaces d'entrée entre les premières parties (46) formant collerette placées dans les parties formant logement et les secondes parties (42) formant collerette.

5. Cartouche de bande d'enregistrement selon la revendication 4, dans laquelle les parties (52) en déport sont prévues pour s'étendre d'un seul tenant à partir de chaque partie d'extrémité de la paire de parties (46) formant paroi et sont conformées en des formes pratiquement en U lorsqu'elles sont vues dans une vue en plan (depuis le côté inférieur), et sont en outre configurées de façon à empêcher toute interférence avec la partie axe (38) associée à l'avancement et à la rétraction des premières parties (40) formant collerette par rapport à la partie formant logement.

6. Cartouche de bande d'enregistrement selon la revendication 4, dans laquelle les parties (62) en déport sont formées en fixant des pièces (68) de forme plate destinées à former des parties en déport respectivement par rapport à la paire de parties (46) formant paroi, dans laquelle les pièces (68) destinées à former des parties en déport sont formées d'un seul tenant à partir de parties (64) en forme de U qui forment pratiquement des formes en U lorsqu'elles sont vues dans une vue en plan (depuis le côté inférieur) et des parties (66) de fixation pratiquement rectangulaires qui s'étendent à partir des parties (64) en forme de U en direction de l'intérieur du boîtier (12).
